(19) Europäisches Patentamt
European Patent Office
Office européen des brevets

(11) **EP 2 533 413 B1**

(12) **EUROPÄISCHE PATENTSCHRIFT**

(45) Veröffentlichungstag und Bekanntmachung des Hinweises auf die Patenterteilung:
**17.09.2014   Patentblatt 2014/38**

(51) Int Cl.:
*H02M 7/493* *(2007.01)*      *H02J 3/38* *(2006.01)*

(21) Anmeldenummer: **11169273.7**

(22) Anmeldetag: **09.06.2011**

(54) **Synchronisierung eines Wechselrichters mit einem elektrischen Leitungsnetz**

Synchronisation of an inverter with an electrical circuit network

Synchronisation d'un onduleur avec un réseau de distribution électrique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.12.2012   Patentblatt 2012/50**

(73) Patentinhaber: **Siemens Aktiengesellschaft 80333 München (DE)**

(72) Erfinder: **Benesch, Norbert 90562 Heroldsberg (DE)**

(56) Entgegenhaltungen:
**DE-B3-102006 059 199**

- **H-P BECK ET AL: "Virtual synchronous machine", ELECTRICAL POWER QUALITY AND UTILISATION, 2007. EPQU 2007. 9TH INTERNATIONAL CONFERENCE ON, IEEE, PISCATAWAY, NJ, USA, 9. Oktober 2007 (2007-10-09), Seiten 1-6, XP031226044, ISBN: 978-84-690-9441-9**
- **LASSETER R H ED - INSTITUTE OF ELECTRICAL AND ELECTRONICS ENGINEERS: "MicroGrids", 2002 IEEE POWER ENGINEERING SOCIETY. WINTER MEETING. CONFERENCE PROCEEDINGS. NEW YORK, NY , JAN. 27 - 31, 2002; [IEEE POWER ENGINEERING SOCIETY], NEW YORK, NY : IEEE, US, Bd. 1, 27. Januar 2002 (2002-01-27), Seiten 305-308, XP010578286, DOI: 10.1109/PESW.2002.985003 ISBN: 978-0-7803-7322-8**

EP 2 533 413 B1

**Beschreibung**

Die Erfindung betrifft ein Verfahren zum Ansteuern eines an ein elektrisches Leitungsnetz angeschlossenen Wechselrichters, eine Vorrichtung zum Ansteuern eines Wechselrichters und einen Wechselrichter.

Ein elektrisches Leitungsnetz ist zur Übertragung elektrischer Energie von einem oder mehreren elektrischen Energieerzeugern zu einem oder mehreren elektrischen Energieverbrauchern vorgesehen.

Als elektrische Energieerzeuger werden Generatoren eingesetzt, die basierend auf einer mechanischen Rotationsenergie eine elektrische Energie erzeugen und in das elektrische Leitungsnetz einspeisen. Darüber hinaus kommen auch selbstgeführte Wechselrichter zum Einsatz, die basierend auf einer elektrischen Gleichspannung aus beispielsweise einer Photovoltaikanlage eine elektrische Energie in das elektrische Leitungsnetz einspeisen.

In gemeinsam von Generatoren und selbstgeführten Wechselrichtern gespeisten elektrischen Leitungsnetzen können instabile Netzspannungen beobachtet werden, wenn der selbstgeführte Wechselrichter zur Aufrechterhaltung einer konstanten elektrischen Wechselspannung als Netzspannung im Leitungsnetz beiträgt. Die instabile Netzspannung kann im schlimmsten Fall zum Zusammenbruch der gesamten elektrischen Energieübertragung führen. Durch die steigende Bedeutung regenerativer Energiequellen für die elektrische Energieversorgung, kann auf den Beitrag von Wechselrichtern zur Aufrechterhaltung der konstanten elektrischen Wechselspannung nicht einfach verzichtet werden.

Aus DE 10 2006 059 199 B3 sind ein Verfahren und eine Vorrichtung zum Ansteuern eines an ein elektrisches Leitungsnetz angeschlossenen Wechselrichters und eine zugehörige Vorrichtung bekannt. Der Wechselrichter ist hierbei dazu vorgesehen, zusammen mit mindestens einem weiteren Wechselrichter ein elektrisches Bordnetz eines Unterseebootes zu speisen. Jeder der zumindest zwei Wechselrichter ist mit einer unabhängigen Regeleinrichtung ausgestattet, welche zur Erfassung von aktuellen elektrischen Kenngrößen an einer Sammelschiene des Bordnetzes und zur Anpassung der Ausgangsspannung des jeweiligen Wechselrichters in Abhängigkeit der erfassten Kenngrößen ausgebildet ist. Jede Regeleinrichtung ist insbesondere mit einer Überlastsicherung ausgestattet, welche dafür Sorge trägt, dass eine längere Überlastung des jeweiligen Wechselrichters vermieden wird, und gegebenenfalls den Wechselrichter vorzeitig abschaltet.

Es ist daher Aufgabe der Erfindung, die Stabilität eines elektrischen Leitungsnetzes, in dem ein selbstgeführter Wechselrichter zur Aufrechterhaltung einer konstanten elektrischen Wechselspannung beiträgt, zu erhöhen.

Die Aufgabe wird durch die Merkmale der unabhängigen Ansprüche gelöst. Die abhängigen Ansprüche enthalten bevorzugte Weiterbildungen der Erfindung.

Der Erfindung liegt die Erkenntnis zugrunde, dass dem selbstgeführten Wechselrichter zur Aufrechterhaltung der konstanten elektrischen Wechselspannung ein Verhalten aufgezwungen wird, das dem Verhalten eines Generators entspricht. Dieses Verhalten wird durch sogenannte Statikkennlinien beschrieben, die die abgegebene Leistung eines Generators der abgegebenen elektrischen Wechselspannung gegenüberstellen. Im Verbundbetrieb mit einem elektrischen Generator kann dem Leitungsnetz aus Sicht des Wechselrichters ebenfalls eine Statikkennlinie zugeordnet werden, die durch die elektrische Last und den Generator beeinflusst wird. Der Schnittpunkt beider Statikkennlinien gibt einen Synchronisationsarbeitspunkt an, in dem der Wechselrichter zur Aufrechterhaltung der konstanten elektrischen Wechselspannung beiträgt. Im Falle einer Störung, wie beispielsweise eines Kurzschlusses, ändert sich die Statikkennlinie des Leitungsnetzes aus Sicht des Wechselrichters im schlimmsten Falle derart, dass der Generator keinen Einfluss mehr auf die Statikkennlinie des Leitungsnetzes aus Sicht des Wechselrichters hat. Während dieser Zeit laufen der Wechselrichter und der Generator daher auseinander. Nach Klärung der Störung sieht der Wechselrichter wieder die ursprüngliche Statikkennlinie des Leitungsnetzes und muss sich zurück in den Synchronisationsarbeitspunkt bewegen. Übersteigt jedoch die notwendige elektrische Ausgabeleistung zur sofortigen Rückkehr in den Synchronisationsarbeitspunkt die Maximalleistung des Wechselrichters, bleibt der Wechselrichter auf dem Weg zurück in den Synchronisationsarbeitspunkt auf seiner Statikkennlinie stehen. Der Generator gleicht dann fehlende Leistung des Wechselrichters aus, indem er sich auf seiner Statikkennlinie über den Synchronisationsarbeitspunkt hinaus bewegt. In der Folge finden Wechselrichter und Generator keinen gemeinsamen Synchronisationsarbeitspunkt mehr, was zu den eingangs genannten Folgen führt. Um die Synchronisation in jedem Fall zu gewährleisten, schlägt die Erfindung vor zu bestimmen, ob eine zur Synchronisation einer Wechselrichterspannung des Wechselrichters mit einer Netzspannung des Leitungsnetzes notwendige Wechselrichterleistung eine Leistungsgrenze des Wechselrichters überschreitet, und den Wechselrichter gegebenenfalls nicht mehr zur Aufrechterhaltung einer konstanten Wechselspannung im Leitungsnetz beitragen zu lassen sondern ihn zunächst an die Wechselspannung im Netz soweit anzunähern, dass er von alleine seine Wechselrichterspannung an die Wechselspannung des Leitungsnetzes heranführen kann, ohne an seine Leistungsgrenze zu geraten.

Die Erfindung gibt daher ein Verfahren zum Ansteuern eines an ein elektrisches Leitungsnetz angeschlossenen Wechselrichters mit folgenden Schritten an:

- Bestimmen, ob eine zur Synchronisation einer Wechselrichterspannung des Wechselrichters mit einer Netzspannung des Leitungsnetzes notwendige Wechselrichterleistung eine Leistungsgrenze des Wechselrichters überschreitet,

- wenn die notwendige Wechselrichterleistung die Leistungsgrenze des Wechselrichters überschreitet,

    - - Erfassen der Leitungsnetzspannung und
    - - Einstellen der Wechselrichterspannung durch Anpassen der einzustellenden Wechselrichterspannung an die Leitungsnetzspannung,

- sonst

    - - Erfassen der durch das Leitungsnetz vom Wechselrichter abgerufenen Wechselrichterleistung, und
    - - Einstellen der Wechselrichterspannung durch Entnehmen der einzustellenden Wechselrichterspannung aus einer Wechselrichter-Statikkennlinie, die die abgerufene Wechselrichterleistung der einzustellenden Wechselrichterspannung gegenüberstellt.

Dadurch, dass die Wechselrichterspannung durch Anpassen der einzustellenden Wechselrichterspannung an die Leitungsnetzspannung eingestellt wird, lassen sich die Wechselrichterspannung und die Leitungsnetzspannung in weniger als einer halben Sekunde miteinander synchronisieren, so dass im Leitungsnetz nach einer Störung, die zu einem Auseinanderlaufen des Wechselrichters und anderen elektrischen Energieversorgern führt, sofort eine synchronisierte gemeinsame Netzspannung verfügbar ist. Durch das angegebene Verfahren wird der Wechselrichter auch besser vor Beschädigungen geschützt, da seine elektrische Energieabgabe an seiner Leistungsgrenze innerhalb kürzester Zeit beendet wird. Das gleiche gilt auch für die anderen elektrischen Energieversorger im Leitungsnetz, wie den oben genannten Generator, der im Falle der asynchronen Leistungsabgabe zwischen Wechselrichter und Generator durch die Kompensation der fehlenden Wechselrichterleistung ebenfalls an seiner Leistungsgrenze betrieben wird. Schließlich lassen sich durch die schnelle Synchronisierung auch Transiente im Netz vermeiden, die zu einer erhöhten Störemission führen und beispielsweise an das Leitungsnetz angeschlossene Verbraucher in ihrer Funktion stören können.

In einer Weiterbildung kann die Wechselrichter-Statikkennlinie einer Generator-Statikkennlinie entsprechen, die eine vom Generator abgegebene Generatorleistung einer sich bei der abgegebenen Generatorleistung einstellenden Generatorspannung gegenüberstellt. Durch die des Generators entsprechenden Statik kann der Wechselrichter aktiv zur Frequenzerhaltung in einem Leitungsnetz beitragen, das von Generatoren mit elektrischer Energie versorgt wird, die mechanische Rotationsenergie in elektrische Energie umwandeln.

In einer weiteren Ausführung kann das Einstellen der Wechselrichterspannung folgende Schritte umfassen:

- Einstellen des Effektivwertes der Wechselrichterspannung, und/oder
- Einstellen der Frequenz der Wechselrichterspannung, und/oder
- Einstellen der Phasendifferenz der Wechselrichterspannung zur Leitungsspannung.

Der Effektivwert der konstanten Wechselspannung im Leitungsnetz kann durch eine reine Einstellung der vom Wechselrichter abgegebenen Blindleistung realisiert werden, während die Frequenz als auch die Phase durch eine reine Einstellung der vom Wechselrichter abgegebenen Wirkleistung realisiert werden kann. Auf diese Weise können die Amplitude und die Frequenz der gemeinsamen Spannung unabhängig voneinander eingestellt werden, was mit einem vergleichsweise geringen Regelaufwand im Wechselrichter realisierbar ist.

In einer zusätzlichen Ausbildung kann darauf geschlossen werden, dass die notwendige Wechselrichterleistung die Leistungsgrenze des Wechselrichters nicht überschreitet wenn das Leitungsnetz eine Störung aufweist. Da eine Störung in der Regel den Wechselrichter von anderen elektrischen Energieerzeugern im Leitungsnetz trennt, ist eine Synchronisation des Wechselrichters mit einem anderen elektrischen Energieerzeuger überhaupt nicht möglich, da keine gemeinsame Informationsquelle in Form der gemeinsamen Wechselspannung im Leitungsnetz vorhanden ist. Dadurch kann auch das oben beschriebene Synchronisationsproblem nicht auftreten, in denen der Wechselrichter und eine weitere elektrische Energieversorgungseinheit ein gemeinsames elektrisches Energieversorgungsnetz mit unterschiedlichen Spannungen speisen. Wird der Wechselrichter dennoch an seine Leistungsgrenze geführt, so kann dies nicht auf ein Synchronisationsproblem zurückzuführen sein, dass durch eine Anpassung der Wechselrichterspannung an die Leitungsnetzspannung behoben werden könnte. Die Störung kann bevorzugt ein Kurzschluss sein.

Weiter zusätzlich kann darauf geschlossen werden, dass die notwendige Wechselrichterleistung die Leistungsgrenze des Wechselrichters nicht überschreitet wenn der Wechselrichter die einzige Energieerzeugungseinheit im Leitungsnetz ist, denn in diesem Fall ist analog zu den durch die Störung gebildeten Teilnetzen keine weitere elektrische Energieversorgungseinheit vorhanden, die das Leitungsnetz im mit zwei verschiedenen elektrischen Wechselspannungen speisen könnte.

Weiter kann darauf geschlossen werden, dass die notwendige Wechselrichterleistung die Leistungsgrenze des Wechselrichters nicht überschreitet wenn der Wechselrichter die stärkste Energieerzeugungseinheit im Leitungsnetz ist, denn in diesem Fall ist der Wechselrichter dafür verantwortlich eine Wechselrichterspannung auszugeben, die als Referenz für die verbleibenden elektrischen Energieversorgungseinheiten für die Synchronisation auf eine gemeinsame Wechselspannung dient.

In einer bevorzugten Ausführung kann die Störung einen Einbruch der Leitungsnetzspannung hervorrufen und die Leistungsgrenze des Wechselrichters von einer Stromgrenze des Wechselrichters abhängig sein. Bei derartigen Störungen, die gewöhnlich durch Kurzschlüsse hervorgerufen werden, ist die vorliegende Erfindung besonders effektiv, da sich die Leistungsgrenze des Wechselrichters mit dem Wiederaufbau der Leitungsspannung ständig nach oben verschiebt. Wird der Wechselrichter daher durch das angegebene Verfahren an den alten Synchronisationsarbeitspunkt vor der Störung herangeführt, kann er störungsfrei seine elektrische Energieabgabe unter Aufrechterhaltung der gemeinsamen Wechselspannung fortsetzen.

In einer anderen Ausbildung der Erfindung können zum Bestimmen, ob der Wechselrichter die einzige Energieerzeugungseinheit im Leitungsnetz ist folgende Schritte durchgeführt werden:

- Ändern der Wechselrichterspannung und der Wechselrichterleistung gemäß der Statik-Kennlinie, und
- Feststellen, dass der Wechselrichter die einzige Energieerzeugungseinheit im Leitungsnetz ist, wenn eine Änderung der Leitungsnetzleistung des Leitungsnetzes unterhalb eines Schwellenwertes bleibt.

Auf diese Weise kann das Verfahren ganz ohne weitere Kommunikation mit anderen Elementen im Leitungsnetz durchgeführt werden.

In einer bevorzugten Ausführung kann fest vorgegeben sein, ob der Wechselrichter die einzige Energieerzeugungseinheit im Leitungsnetz ist. Die entsprechende Information kann beispielsweise von einem Master bereitgestellt werden, der auch die Sollwerte für die Primär- und Sekundärregelung der elektrischen Energieabgabe im Leitungsnetz vorgibt.

In einer besonderen Weiterbildung kann der Wechselrichter nach jedem Einstellen der Wechselrichterspannung gemäß der Leitungsnetzspannung zum erneuten Bestimmen vorgesehen sein, ob die notwendige Wechselrichterleistung die Leistungsgrenze des Wechselrichters überschreitet. Auf diese Weise wird erreicht, dass das angegebene Verfahren lediglich zur Korrektur des Wechselrichters in seiner elektrischen Leistungsabgabe angewendet werden kann, so dass die Zeit, die der Wechselrichter zur Aufrechterhaltung der gemeinsamen Wechselspannung beiträgt, maximiert wird.

In einer weiteren bevorzugten Ausbildung der Erfindung kann das Anpassen der einzustellenden Wechselrichterspannung an die Leitungsnetzspannung schrittweise durch Begrenzen der Änderung der Wechselrichterspannung erfolgen, so dass vermieden wird, dass der Wechselrichter selbst beim Anpassen der einzustellenden Wechselrichterspannung an die Leitungsnetzspannung an seine Leistungsgrenze gerät und überhaupt nicht mehr zu einer gemeinsamen Wechselspannung zurückgefunden werden kann.

In einer anderen Weiterbildung der Erfindung kann zwischen dem Anpassen der einzustellenden Wechselrichterspannung an die Leitungsnetzspannung und dem Entnehmen der einzustellenden Wechselrichterspannung aus der Wechselrichter-Statikkennlinie durch Umschalten hin- und hergewechselt werden.

In einer zusätzlichen Weiterbildung kann das Anpassen der einzustellenden Wechselrichterspannung an die Leitungsnetzspannung durch folgende Schritte erfolgten:

- Berechnen einer Differenz aus einem Sollwert für die Wechselrichterspannung und einem Istwert der erfassten Leitungsspannung, und
- Umwandeln der Differenz gemäß einer Regelungsvorschrift, und
- Berechnen der einzustellenden Wechselrichterspannung durch Addieren der umgewandelten Differenz mit dem Istwert. Auf diese Weise ist eine Folgeregelung zum Anpassen der Wechselrichterspannung an die Leitungsspannung bereitgestellt, deren Geschwindigkeit über die Regelungsvorschrift eingestellt werden kann.

Dabei kann der Istwert aus der Wechselrichter-Statikkennlinie als einzustellende Wechselrichterspannung entnommen werden. Auf diese Weise kann die Wechselrichter-Statikkennlinie auch während der Folgeregelung im Fehlerfall eingesetzt werden, wodurch das Zurückschalten in den Betrieb des Wechselrichters zur aktiven Aufrechterhaltung der gemeinsamen Wechselspannung über die Regelungsvorschrift sehr sanft erfolgen kann.

In einer bevorzugten Ausführung kann die Regelungsvorschrift dem Verhalten eines Proportionalreglers entsprechen, der die Differenz zum Umwandeln mit einem Gewichtungsfaktor gewichtet. Über den Proportionalfaktor ist die Geschwindigkeit der Folgeregelung direkt einstellbar.

Dabei kann der Gewichtungsfaktor aus einem Intervall [0;1] gewählt werden. Während bei einem Gewichtungsfaktor von 0 die einzustellende Wechselrichterspannung direkt aus der Statikkennlinie entnommen wird, wird bei einem Gewichtungsfaktor von 1 die einzustellende Wechselspannung direkt durch die Leitungsnetzspannung bestimmt. Zwischen den Werten von 0 und 1 kann dann das Umschalten zwischen den beiden Bestimmungsarten für die Wechselrichterspannung sehr sanft erfolgen.

Besonders bevorzugt liegt der Gewichtungsfaktor im Intervall ]0;1[.

Die Erfindung gibt auch eine Vorrichtung zum Ansteuern eines Wechselrichters, die folgende Merkmale umfasst:

- eine Spannungsstelleinrichtung zum Einstellen der Wechselrichterspannung, wobei die Spannungsstelleinrichtung zum Ausführen eines angegebenen Verfahrens eingerichtet ist.

In einer bevorzugten Weiterbildung kann die Vorrichtung eine Phasenregelschleife zum Erfassen der Leitungsnetzspannung umfassen. Durch die Phasenregelschleife ist die Leitungsnetzspannung sehr stabil und mit geringen Störungen bestimmbar.

In einer zusätzlichen Weiterbildung kann die Vorrichtung einen Tiefpass zum Filtern der erfassten Leitungsnetzspannung und zum Ausgeben der einzustellenden Wechselrichterspannung umfassen. Durch den Tiefpass wird die Anpassungsgeschwindigkeit der einzustellenden Wechselrichterspannung an die Leitungsnetzspannung und somit die notwendige Leistungsausgabe des Wechselrichters wirksam unter der Leistungsgrenze des Wechselrichters gehalten.

Die Erfindung gibt auch einen Wechselrichter zum Anschluss an ein elektrisches Energieversorgungsnetz mit einer angegebenen Vorrichtung an.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:

FIG 1       ein Prinzipschaltbild eines elektrischen Energieversorgungsnetzes,

FIG 2A      eine Wirkleistungsstatikkennlinie eines elektrischen Energieerzeugers aus FIG 1,

FIG 2B      eine Blindleistungsstatikkennlinie eines elektrischen Energieerzeugers aus FIG 1,

FIG 3A      ein Laststromdiagramm,

FIG 3B      ein Spannungsdiagramm im Falle eines Kurzschlusses im elektrischen Energieversorgungsnetz der FIG 1,

FIG 4       einen Ausschnitt der Wirkleistungsstatikkennlinie aus FIG 2,

FIG 5A      eine Wechselrichterstrommessung zum Kurzschlussverhalten des Wechselrichters aus FIG 1,

FIG 5B      eine Frequenzmessung,

FIG 6       einen Ausschnitt des Leitungsnetzes aus FIG 1,

FIG 7       ein erstes Ausführungsbeispiel der Vorrichtung aus FIG 6,

FIG 8       ein zweites Ausführungsbeispiel der Vorrichtung aus FIG 6,

FIG 9       ein drittes Ausführungsbeispiel der Vorrichtung aus FIG 6,

FIG 10      ein viertes Ausführungsbeispiel der Vorrichtung aus FIG 6,

FIG 11      ein Ausführungsbeispiel eines Verfahrens gemäß der Erfindung und

FIG 12A     eine Wechselrichterstrommessung,

FIG 12B     eine Frequenzmessung zum Kurzschlussverhalten des Wechselrichters mit der Vorrichtung aus FIG 6,

zeigt.

In den Figuren werden gleiche Elemente mit gleichen Bezugszeichen versehen.

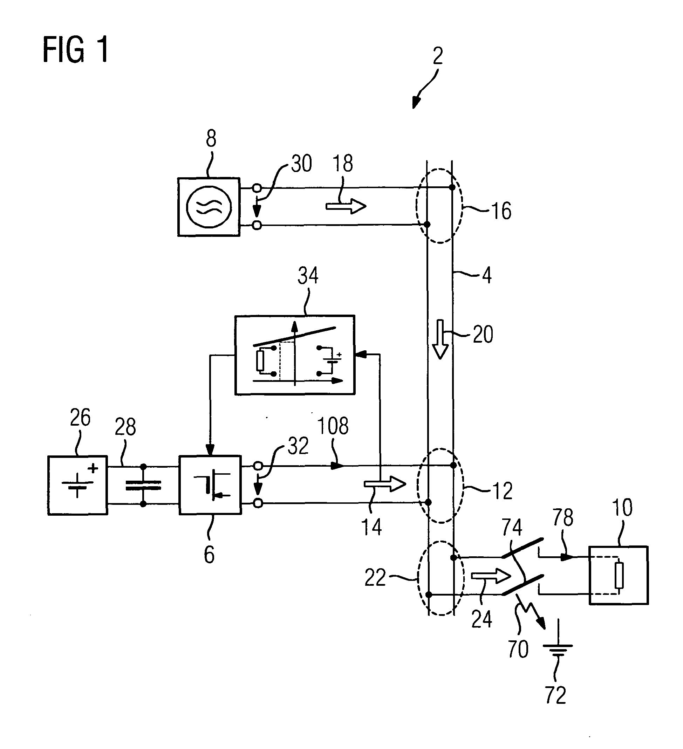

FIG 1 zeigt ein Prinzipschaltbild eines elektrischen Energieversorgungsnetzes 2. Das elektrische Energieversorgungsnetz 2 kann beispielsweise als Inselnetz auf einem Schiff ausgebildet sein und im Regelbetrieb völlig unabhängig von anderen elektrischen Energieversorgungsnetzen betrieben werden. Das elektrische Energieversorgungsnetz 2 wird anhand einer zweiphasigen elektrischen Energieversorgung erklärt. Alle nachfolgenden Aussagen lassen sich aber in einer dem Fachmann bekannten Weise auf beliebig viele Phasen erweitern.

In dem elektrischen Energieversorgungsnetz 2 sind über ein Leitungsnetz 4 ein Wechselrichter 6, ein Generator 8 und ein Verbraucher 10 miteinander verbunden. Während der Wechselrichter 6 und der Generator 8 jeweils an einem Wechselrichteranschlusspunkt 12 eine elektrische Wechselrichterleistung 14 und an einem Generatoranschlusspunkt 16 eine elektrische Generatorleistung 18 in das Leitungsnetz 4 einspeisen und so eine elektrische Netzleistung 20 aufrechterhalten, entnimmt der Verbraucher 10 an einem Verbraucheranschlusspunkt 22 dem Leitungsnetz 4 eine elektrische Verbraucherleistung 24.

Der Wechselrichter 6 wird aus einer Gleichspannungsquelle 26, wie beispielsweise einer Photovoltaikzelle oder einer Batterie über eine Stabilisierungskapazität 28 mit elektrischer Energie versorgt. Alternativ kann als Gleichspannungsquelle 26 eine rotierende Energieerzeugung, wie zum Beispiel ein Windkraftrad mit einem motorseitigen ACDC-Wechselrichter verwendet werden.

Die Wechselrichterleistung 14 und die Generatorleistung 18 müssen aufeinander synchronisiert werden, um zu vermeiden, dass der Wechselrichter 6 und der Generator 8 untereinander elektrische Leistung austauschen und wie elektrische Verbraucher zueinander wirken. Zur Synchronisation kann die Abhängigkeit der Generatorspannung 30 von der Generatorleistung 18 genutzt werden. Diese Abhängigkeit wird durch dem Fachmann bekannte Statikkennlinien beschrieben. Beispielsweise sinkt die Frequenz der Generatorspannung 30 mit steigendem Wirkanteil in der Generatorleistung 18, oder der Effektivwert der Generatorspannung 30 sinkt mit steigendem Blindanteil in der Generatorleistung 18.

Da die Wechselrichterspannung 32 nicht von der Wechselrichterleistung 14 abhängig ist, muss sie künstlich von der Wechselrichterleistung 14 abhängig gemacht werden. Dies erfolgt dadurch, dass für den Wechselrichter 6 Wechselrichter-Statikkennlinien vorgegeben werden und die Wechselrichterspannung 32, wie in FIG 1 angedeutet, über die invertierten Wechselrichter-Statikkennlinien 34 von der Wechselrichterleistung 14 abhängig gemacht wird.

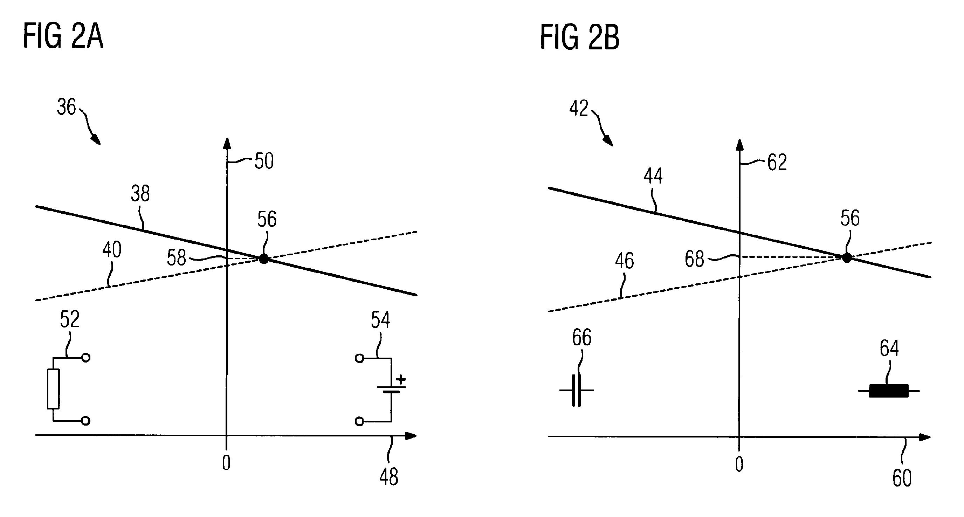

Die Abhängigkeiten der Wechselrichterspannung 32 von der Wechselrichterleistung 14 und der Generatorspannung 30 von der Generatorleistung 18 bewirken in dem Fachmann bekannter Weise eine einheitliche Netzspannung am Wechselrichteranschlusspunkt 12 und am Generatoranschlusspunkt 16. Nachstehend werden dazu anhand FIG 2 einige Definitionen eingeführt.

FIG 2 zeigt ein Wirkleistungsdiagramm 36 mit einer Wechselrichter-Wirkleistungsstatikkennlinie 38 und einer vom Wechselrichter 6 aus gesehenen Leitungsnetz-Wirkleistungsstatikkennlinie 40. Darüber hinaus zeigt FIG 2B ein Blindleistungsdiagramm 42 mit einer Wechselrichter-Blindleistungsstatikkennlinie 44 und einer vom Wechselrichter 6 aus gesehenen Leitungsnetz-Blindleistungsstatikkennlinie 46.

Ein Wirkleistungsdiagramm stellt für einen beliebigen Zweipol die vom Zweipol abgegebene oder aufgenommene Wirkleistung 48 der Frequenz 50 seiner abgegebenen oder aufgenommenen Spannung gegenüber. Ist die Wirkleistung 48 positiv so wirkt der Zweipol wie ein Erzeuger 52. Ist die Wirkleistung 48 negativ so wirkt der Zweipol wie ein Verbraucher 54.

Die Wechselrichter-Wirkleistungsstatikkennlinie 38 ist wie bereits erwähnt vorgegeben. Die Leitungsnetz-Wirkleistungsstatikkennlinie 40 stellt das Verhalten des Leitungsnetzes 4 aus Sicht des Wechselrichters 6 dar und ist von einer nicht gezeigten Generator-Wirkleistungsstatikkennlinie, der Impedanz des Verbrauchers 10 und der Impedanz des Leitungsnetzes 4 abhängig.

Im Betrieb, wenn der Wechselrichter 6 und das vom Wechselrichter 6 aus gesehene Leitungsnetz 4 miteinander verbunden sind stellt sich zwischen der Wechselrichterleistung 14 und der vom Leistungsnetz 4 aufgenommenen elektrischen Leistung am Wechselrichteranschlusspunkt 12 der Wechselrichter-Arbeitspunkt 56 ein, in dem sich die Wechselrichter-Wirkleistungsstatikkennlinie 38 und die Leitungsnetz- Wirkleistungsstatikkennlinie 40 schneiden. Durch den Arbeitspunkt ist die Netzfrequenz 58 der gemeinsamen Netzspannung gegeben.

Darüber hinaus stellt ein Blindleistungsdiagramm für einen beliebigen Zweipol die vom Zweipol abgegebene oder aufgenommene Blindleistung 60 dem Effektivwert 62 seiner abgegebenen oder aufgenommenen Spannung gegenüber. Ist die Blindleistung 60 positiv, wirkt der Zweipol wie eine Induktivität 64. Ist die Blindleistung 60 negativ, wirkt der Zweipol wie eine Ka-pazität 66.

Die Wechselrichter-Blindleistungsstatikkennlinie 44 ist ebenfalls vorgegeben. Die Leitungsnetz-Blindleistungsstatikkennlinie 46 stellt wieder das Verhalten des Leitungsnetzes 4 aus Sicht des Wechselrichters 6 dar und ist von einer nicht gezeigten Generator-Blindleistungsstatikkennlinie, der Impedanz des Verbrauchers 10 und der Impedanz des Leitungsnetzes 4 abhängig.

Werden der Wechselrichter 6 und das vom Wechselrichter 6 aus gesehene Leitungsnetz 4 miteinander verbunden kann aus dem Schnittpunkt zwischen der Wechselrichter-Blindleistungsstatikkennlinie 44 und der Leitungsnetz- Blindleistungsstatikkennlinie 46 der Netzeffektivwert 68 der gemeinsamen Netzspannung abgelesen werden.

Es wird im Folgenden wieder auf FIG 1 Bezug genommen.

Im Falle eines Kurzschlusses 70 des Verbrauchers 10 zur Erde 72 kann der Verbraucher 10 über eine Sicherung 74 vom Leitungsnetz 4 getrennt werden.

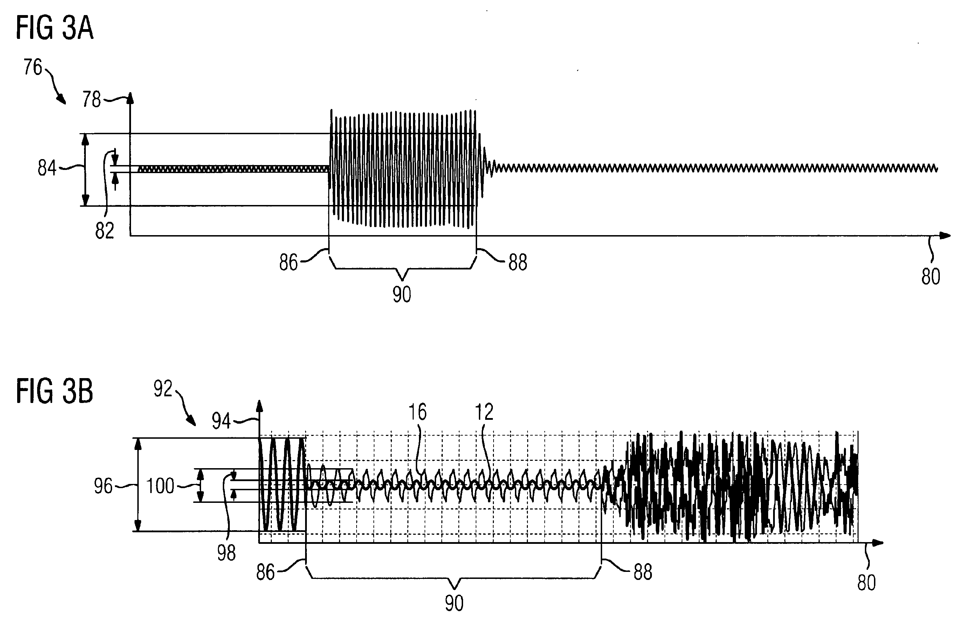

Der Kurzschluss soll nachstehend anhand von FIG 3A und 3B definiert werden. In einem Laststromdiagramm 76 der FIG 3A ist der Laststrom 78, der Verbraucherleistung 24 über die Zeit 80 aufgetragen. Im Regelbetrieb ohne den Kurzschluss weist der Laststrom 78 einen Betriebs-Spitze-zu-Spitze-Wert 82 auf, der einen Kurzschluss-Schwellenwert 84 nicht überschreitet. Im Fall des Kurzschlusses 70 steigt der Laststrom 78 an und überschreitet zu Kurzschlussbeginn 86 den Kurzschluss-Schwellenwert 84. Bis die Sicherung 74 zum Kurzschlussende 88 reagiert vergeht eine Kurzschlussdauer 90.

In einem Spannungsdiagramm 92 der FIG 3B ist die Netzspannung 94 am Wechselrichteranschlusspunkt 12 und am Generatoranschlusspunkt 16 über die Zeit 80 aufgetragen. Wie aus dem Spannungsdiagramm 92 unmittelbar ersichtlich, liegt am Wechselrichteranschlusspunkt 12 und am Generatoranschlusspunkt 16 vor Kurzschlussbeginn 86 eine gemeinsame Netzspannung 94 an, die einen Netz-Spitze-zu-Spitze-Wert 96 auf. Nach Kurzschlussbeginn 86 während der Kurzschlussdauer 90 bricht die Netzspannung 94 am Wechselrichteranschlusspunkt 12 auf einen kleineren Spitze-zu-Spitze-Wert 98 ein, als die Netzspannung 94 Generatoranschlusspunkt 16, deren Spitze-zu-Spitze-Wert mit dem Bezugszeichen 100 versehen ist, da der Wechselrichter 6 für die Aufzeichnung näher am Kurzschluss 70 lag als der Generator 8.

Wie aus dem Spannungsdiagramm 92 der FIG 3B ersichtlich, kann nach Kurzschlussende 88 an den Anschlusspunkten 12, 16 keine gemeinsame Netzspannung 94 mehr gefunden werden.

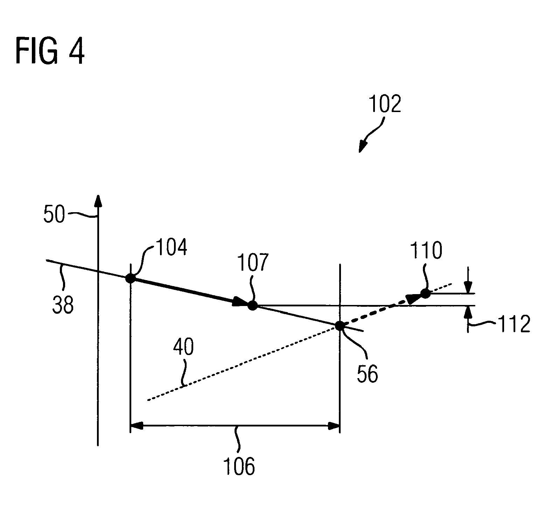

Dies soll beispielhaft anhand FIG 4 näher erläutert werden, die einen Ausschnitt 102 des Wirkleistungsdiagramms 36 der FIG 2A zeigt. Für eine übersichtlichere Darstellung soll nachstehend angenommen werden, dass der Verbraucher 10 rein ohmsch und damit frequenzunabhängig ist.

Für die Kurzschlussdauer 90 befindet sich der Wechselrichter 6 in einem Kurzschlussarbeitspunkt 104. Nach dem Auslösen der Sicherung 74, wenn die Leitungsnetz-Wirkleistungsstatikkennlinie 40 aus Sicht des Wechselrichters 6 wieder vom Generator 8 abhängig ist, und sich beide Kennlinien wieder im Wechselrichter-Arbeitspunkt 56 schneiden, muss der Wechselrichter 6 zusätzliche Wirkleistung 106 bereitstellen, um auf seiner Wechselrichter-Wirkleistungskennlinie 38 in den Wechselrichter-Arbeitspunkt 56 zurückzukehren. Da die Netzspannung 94 am Wechselrichter 6 durch den Kurzschluss 70 sehr klein ist, kann die zusätzliche Wirkleistung 106 im Wesentlichen lediglich über den in FIG 1 gezeigten Wechselrichterstrom 108 bereitgestellt werden, der jedoch durch eine Stromgrenze des Wechselrichters 6 ebenfalls begrenzt ist. In der Folge bleibt der Wechselrichter 6 auf seiner Wechselrichter-Wirkleistungskennlinie 38 vor dem Wechselrichter-Arbeitspunkt 56 an einem Grenzarbeitspunkt 107 stehen.

Zwar unterliegt der Generator 8 prinzipiell demselben Problem wie der Wechselrichter 6, er weist jedoch eine weitaus höhere Stromgrenze auf und kann sich auf seiner Generator-Wirkleistungsstatikkennlinie zurückbewegen. Da der Wechselrichter 6 dem Generator 8 nicht folgen kann, bewegt sich der Generator auf seiner Generator-Wirkleistungsstatikkennlinie über seinen Generator-Arbeitspunkt hinaus, um die vom Wechselrichter 6 fehlende Wirkleistung 48 bereitzustellen. Aus Sicht des Wechselrichters 6 nimmt das Leitungsnetz 4 so auf der Leitungsnetz-Wirkleistungsstatikkennlinie 40 einen Ausgleicharbeitspunkt 110 ein. In der Folge gibt der Wechselrichter 6 eine Wechselrichterspannung 32 aus, die eine mit einem Frequenzunterschied 112 verschiedene Frequenz 50 zur Netzspannung 94 aufweist.

Die Situation ergibt anhand der Blindleistungsstatikkennlinien 44, 46 sieht analog aus. Die Situation verschärft sich weiter, da sich die Wirkleistungsstatikkennlinie 38 und die Blindleistungsstatikkennlinie 44 des Wechselrichters 6 beim Betrieb des Wechselrichters 6 bei seiner Stromgrenze $I_{max}$ miteinander vermischen und der Wirkstrom Ip des Wechselrichters 14 und der Blindstrom $I_Q$ des Wechselrichters 14 über den Gesamtstrom $I_{ges}$ wie folgt miteinander verkoppelt sind:

$$I_P = \sqrt{I_{max}^2 - I_Q^2} \ .$$

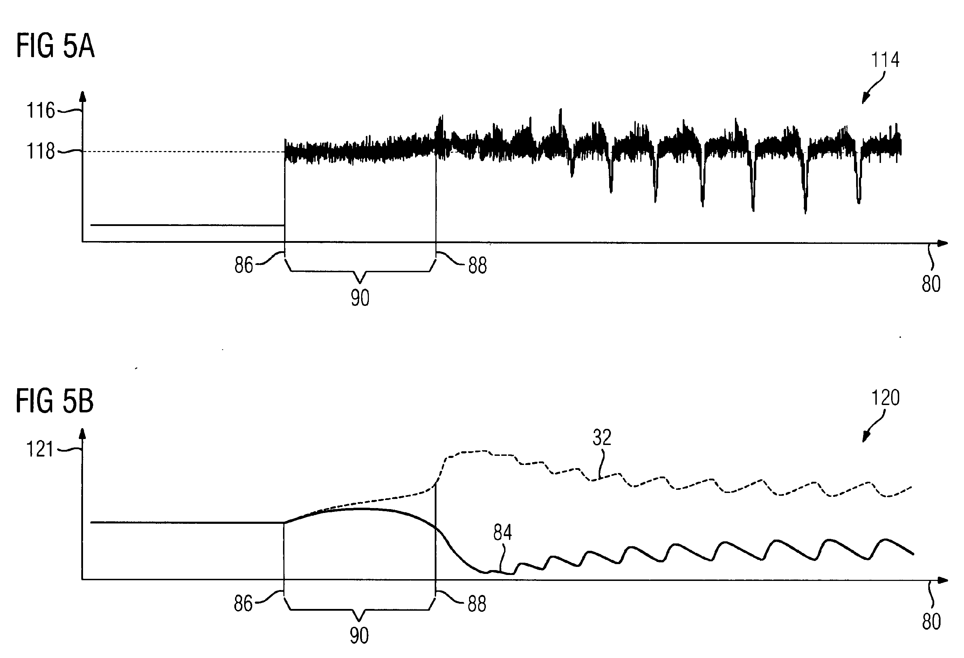

In FIG 5A und 5B sind Messergebnisse dargestellt, die das zuvor beschriebene Synchronisationsproblem der Wechselrichterspannung 32 mit der Netzspannung 94 nach einer Störung wie einem Kurzschluss 70 zeigen.

In einem Wirkstromdiagramm 114 der FIG 5A ist zu sehen, wie der Wechselrichtergesamtstrom 116 durch den Kurzschluss 70 auf einen Maximalwirkstrom 118 gezogen wird, und auch nach Kurzschlussende 88 nicht wieder abnimmt.

In einem eine Frequenz 121 der Zeit 80 gegenüberstellenden Frequenzdiagramm 120 der FIG 5B ist zu sehen, wie die Frequenz der Wechselrichterspannung 32 und die Frequenz der Netzspannung 84 auseinanderlaufen und sich nicht mehr synchronisieren lassen.

Um dieses Problem zu beseitigen, schlägt die Erfindung vor, die Wechselrichterspannung 32 im Falle des Synchronisationsproblems an die Netzspannung 84 am Wechselrichteranschlusspunkt 12 anzupassen. Dies kann beispielsweise dadurch erreicht werden, dass der Wechselrichter 4 im Falle des Synchronisationsproblems fremdgeführt, beispielsweise durch eine Brückenschaltung und sonst selbstgeführt ausgeführt wird.

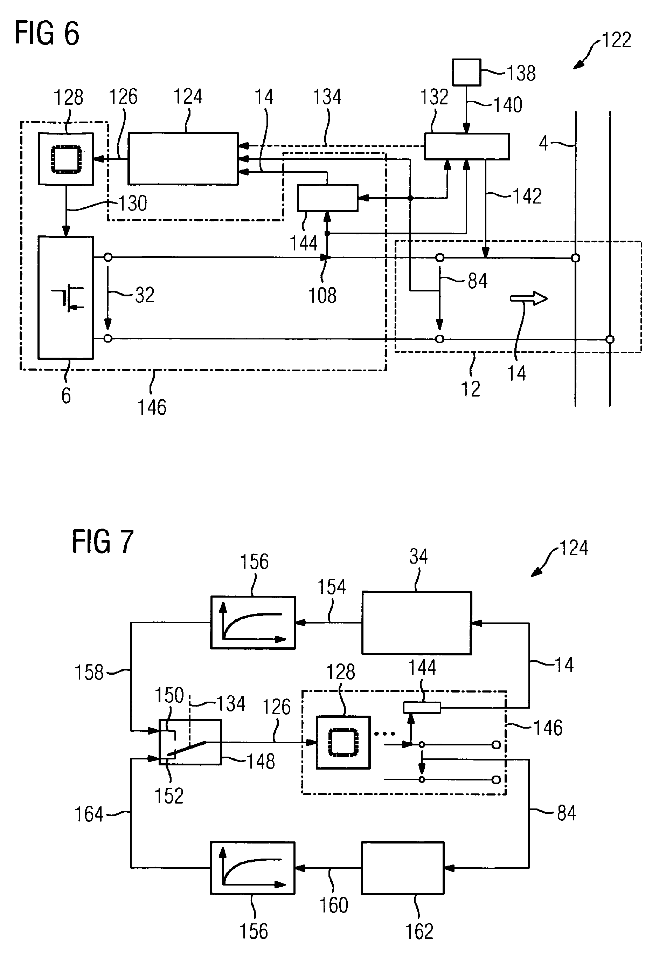

FIG 6 zeigt einen Ausschnitt 122 aus dem elektrischen Energieversorgungsnetz 2 der FIG 1 mit einer Vorrichtung 124 zur Steuerung des Wechselrichters 6. Der Wechselrichter 6 ist nachstehend ein selbstgeführter Wechselrichter.

Die Vorrichtung 124 kann basierend auf der in das Leitungsnetz 4 eingespeisten Wechselrichterleistung 14 ein Stellsignal 126 an einen Ansteuerprozessor 128 des Wechselrichters 6 ausgeben, der wiederum basierend auf dem Stellsignal 126 Taktsignale 130 an nicht gezeigte Schalter des Wechselrichters 6 ausgeben kann, mit denen der Wechselrichter 6 die Wechselrichterspannung 32 erzeugt.

Die Vorrichtung 124 schaltet den Betrieb des Wechselrichters 6 zwischen einem Regelbetriebsmodus und einem Fehlerbetriebsmodus hin und her. Solange es keine Synchronisationsprobleme gibt, kann der Wechselrichter 6 im Regelbetriebsmodus dazu beitragen, die Netzspannung 84 im Leitungsnetz 4 konstant zu halten. Im Falle von Synchronisationsproblemen sollte der Wechselrichter 4 der Leitungsspannung 90 folgen.

Zum Umschalten zwischen dem Regelbetriebsmodus und dem Fehlerbetriebsmodus kann eine Fehlererkennungseinrichtung 132 der Vorrichtung 124 den Wechselrichteranschlusspunkt 12 auf Synchronisationsprobleme hin überwachen und der Vorrichtung ein entsprechendes Zustandssignals 134 ausgeben. Nachstehend werden einige Kriterien zur Erkennung eines Synchronisationsproblems genannt. Je mehr dieser Kriterien in die Erkennung eines Synchronisationsproblems einbezogen werden, desto verlässlicher ist die Überwachung und desto weniger wird der Wechselrichter 6 fehlerhaft in den Fehlerbetriebsmodus überführt.

Als erstes Kriterium kann die Fehlererkennungseinrichtung 132 überprüfen, ob ein Wechselrichterstrom 108 seinen Maximalstrom $I_{ges}$ erreicht hat.

Alternativ oder zusätzlich kann die Fehlererkennungseinrichtung 132 überprüfen, ob aktuell ein Kurzschluss 70 im Leitungsnetz 4 vorliegt. Dies kann beispielsweise dadurch geschehen, dass die Höhe der Netzspannung 84 überwacht und einem Schwellenwert gegenübergestellt wird. Im Falle eines Kurzschlusses unterschreitet die Netzspannung 84 den Schwellenwert.

Weiter alternativ oder zusätzlich kann die Fehlererkennungseinrichtung 132 überprüfen, ob der Wechselrichter 6 derzeit als einzige elektrische Energieerzeugungseinheit an das Leitungsnetz 4 angeschlossen ist.

Dazu kann die Fehlererkennungseinrichtung 132 beispielsweise von einem Master 138 ein Parametrisierungssignal 140 erhalten, aus dem hervorgeht wie viele elektrische Energieerzeugungseinheiten an das Leitungsnetz 4 angeschlossen sind. Der Master 138 kann beispielsweise für die dem Fachmann bekannte Primärregelung und Sekundärregelung der Netzspannung 84 vorgesehen sein, auf die nicht näher eingegangen werden soll.

Alternativ oder zusätzlich kann die Fehlererkennungseinrichtung 132 im Regelbetriebsmodus eine Störung 142 in das Leitungsnetz 4 einspeisen, und so den Wechselrichter 6 gezielt aus dem Wechselrichterarbeitspunkt 56 lenken. Ändert sich die Netzleistung 20 signifikant entsprechend der eingebrachten Störung 142, so kann angenommen werden, dass diese Reaktion von einer weiteren Erzeugereinheit mit einem Statikkennlinien-Verhalten hervorgerufen wird.

Als Störung 142 werden vorzugsweise sprunghafte und sinusförmige Ströme oder Spannungen vorgeschlagen, deren Amplitude nicht zu einer Verletzung der zulässigen Toleranzgrenzen für die Netzspannung 84 führen darf. Zudem muss das Zeitverhalten an die dominierende Zeitkonstante des Generators 8 angepasst sein, um bei diesem eine Frequenz-Spannungs-Reaktion hervorzurufen.

In FIG 6 wird die Wechselrichterleistung 14 über ein Leistungsmessgerät 144 basierend auf der Netzspannung 84 und dem Wechselrichterstrom 108 erfasst.

Nachstehend wird die Vorrichtung 124 anhand von vier Ausführungsbeispielen näher beschrieben. Zur Vereinfachung der weiteren Darstellungen werden der Ansteuerprozessor 128, der Wechselrichter 6 und das Leistungsmessgerät 144 zu einer Regelstrecke 146 zusammengefasst, die durch die Vorrichtung 124 über das Stellsignal 126 angesteuert wird.

In FIG 7 ist das erste Ausführungsbeispiel der Vorrichtung 124 gezeigt.

Ein durch das Zustandssignal 134 steuerbarer Schalter 148 gibt vor, in welchem der beiden Betriebsmodi der Wechselrichter 20 der Regelstrecke 146 angesteuert werden soll. Dazu ist der Schalter in eine Stellung für den Regelbetriebsmodus 150 und eine Stellung für den Fehlerbetriebsmodus 152 überführbar.

Im Regelbetriebsmodus 150 wird der Wechselrichter 6 wie in FIG 1 über die invertierte Wechselrichter-Statikkennlinie 34 mit einem Ansteuersignal derart angesteuert, das der Wechselrichter 6 sich einem vorgegebenen Statikverhalten anpasst und so aktiv zur Erhaltung einer konstanten Netzspannung 84 beiträgt. Da der Wechselrichter 6 in diesem Fall eine bestimmte Wechselrichterleistung 14 in das Leitungsnetz 4 abgeben muss, soll das Ansteuersignal im Regelbetriebsmodus 150 als Leistungssteuersignal 154 bezeichnet werden. Über einen Tiefpassfilter 156 mit PT1-Verhalten können aus dem Leistungssteuersignal 154 Schwankungen gedämpft werden, die beispielsweise aus Rauschen herrühren. Das tiefpassgefilterte Leistungssteuersignal 158 wird im Regelbetriebsmodus 150 schließlich als das Stellsignal 126 an den Ansteuerprozessor 156 ausgegeben, um die Wechselrichterspannung 32 einzustellen.

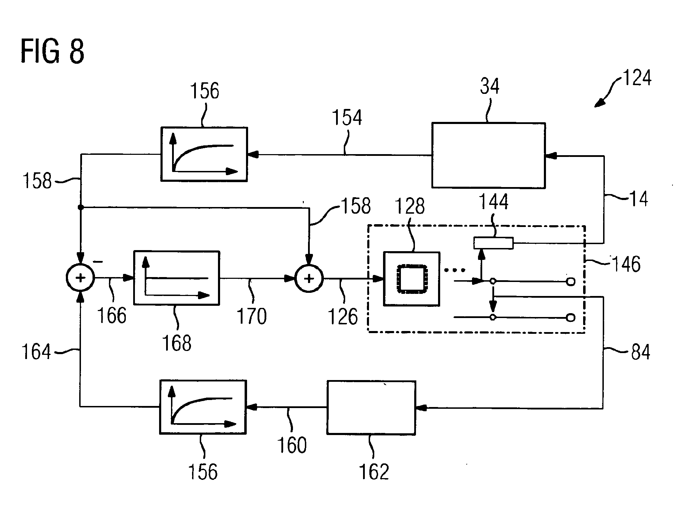

Im Fehlerbetriebsmodus 152 wird die Regelstrecke 146 mit einem Ansteuersignal derart angesteuert, dass die Wechselrichterspannung 32 der Netzspannung 84 folgt. Das Ansteuersignal soll im Fehlerbetriebsmodus daher als Folgesteuersignal 160 bezeichnet werden. Das Folgesteuersignal 160 kann beispielsweise aus der Netzspannung 84 über eine Phasenregelschleife 162, PLL 162 genannt, in einer für den Fachmann bekannten Weise abgeleitet werden, um das Folgesteuersignal 160 zu stabilisieren. Über einen weiteren Tiefpassfilter 156 können wieder Schwankungen im Folgesteuersignal 160 gedämpft werden, wobei das tiefpassgefilterte Folgesteuersignal 164 als das Stellsignal 126 an den Ansteuerprozessor 128 ausgegeben wird. In FIG 8 ist das zweite Ausführungsbeispiel der Vorrichtung 124 gezeigt.

Im zweiten Ausführungsbeispiel kann das tiefpassgefilterte Leistungssteuersignal 158 vom tiefpassgefilterten Folgesteuersignal 164 abgezogen werden. Die resultierende Regeldifferenz 166 kann einem Regler 168 zugeführt werden. Ein resultierendes Regelsignal 170 kann unter Einsatz des in FIG 7 gezeigten Schalters 148 im Fehlerbetriebsmodus 152 in nicht gezeigter Weise direkt als Stellsignal 126 an den Ansteuerprozessor 128 ausgegeben werden. Auf diese Weise stellt die tiefpassgefilterte Folgesteuersignal 164 und damit die Netzspannung 84 eine Führungsgröße für die Wechselrichterspannung 32 dar. Im Regelbetriebsmodus 150 kann dann in zu FIG 7 analoger Weise das tiefpassgefilterte Leistungssteuersignal 158 als Stellsignal 126 ausgegeben werden.

Wie in FIG 8 gezeigt, kann das tiefpassgefilterte Leistungssteuersignal 158 aber auch auf das Regelsignal 170 aufgeschaltet werden. Dadurch geht aus dem Stellsignal 126 die einzustellende Wechselrichterspannung 32 direkt hervor.

Auf diese Weise kann zwischen dem Regelbetriebsbereich 150 und dem Fehlerbetriebsbereich 152 kontinuierlich ohne Sprünge umgeschaltet werden. Weist der Regler 168 beispielsweise ein P-Verhalten auf, so kann über den Regler 168 ein Gewichtungsfaktor für die Regeldifferenz 166 vorgegeben werden, der die Geschwindigkeit der Anpassung der Wechselrichterspannung 32 an die Netzspannung 84 vorgibt.

Ist der Verstärkungsfaktor exakt 0, so wird die Regeldifferenz 166 vollständig unterdrückt, so dass nur das tiefpassgefilterte Leistungssteuersignal 158 als Stellsignal 126 ausgegeben wird. Der Verstärkungsfaktor von exakt 0 ersetzt daher den Schalter 148 in der Stellung für den Regelbetriebsmodus 150.

Bei einem Verstärkungsfaktor von exakt 1 wird das tiefpassgefilterte Folgesteuersignal 164 ausgegeben, da sich das tiefpassgefilterte Leistungssteuersignal 158 durch die negative Aufschaltung vor dem Regler 168 und die positive Aufschaltung nach dem Regler 168 bei diesem Verstärkungsfaktor aufhebt. Der Verstärkungsfaktor von exakt 1 ersetzt daher den Schalter 148 in der Stellung für den Fehlerbetriebsmodus 152.

Werden für den Verstärkungsfaktor des Reglers 168 Werte zwischen 0 und 1 gewählt kann über den Regler 168 damit kontinuierlich und ohne Sprünge vom Regelbetriebsmodus in den Fehlerbetriebsmodus und umgekehrt umgeschaltet werden.

Auf die Verwendung des Schalters 148 kann im dritten Ausführungsbeispiel optional vollständig verzichtet werden. Wird der Schalter dennoch nach dem Regler 168 verwendet, kann der Regler 168 auch unveränderlich parametriert und die Geschwindigkeit der Anpassung der Wechselrichterspannung 32 an die Netzspannung 84 fest voreingestellt werden.

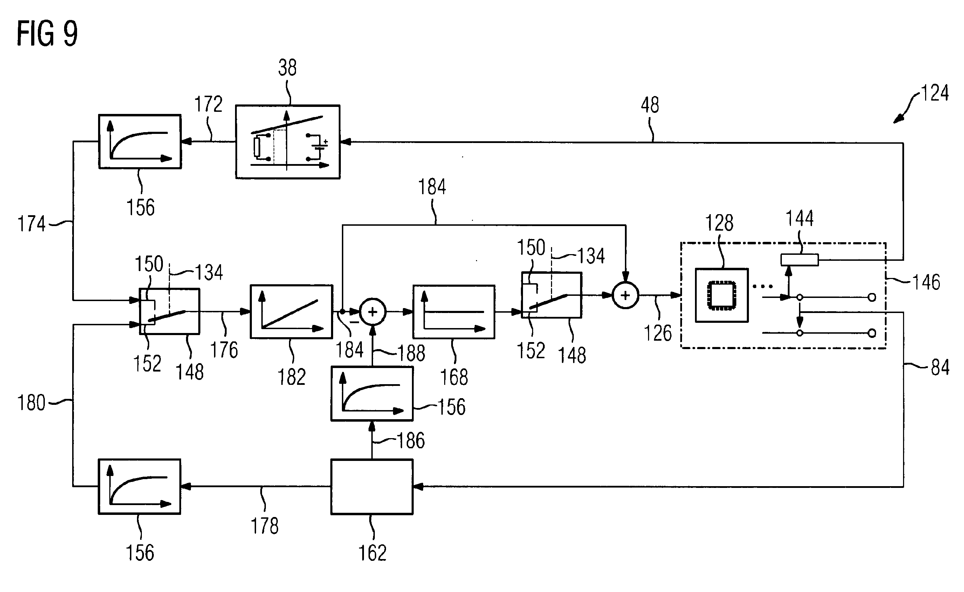

In FIG 9 ist das dritte Ausführungsbeispiel zur Berechnung des Stellsignals 126 gezeigt, das zur Einstellung der Frequenz der Wechselrichterspannung basierend auf der invertierten Wechselrichter-Wirkleistungsstatikkennlinie 38 herangezogen wird.

Im dritten Ausführungsbeispiel erfasst das Leistungsmessgerät 144 die Wirkleistung 48 der Wechselrichterleistung 14 basierend auf der Netzspannung 84, dem Wechselrichterstrom 108 und der Phasenverschiebung zwischen beiden Größen. Über die invertierte Wechselrichter-Wirkleistungsstatikkennlinie 34 wird die Ansteuerfrequenz bestimmt, die der Wechselrichter 6 zur Erfüllung seiner vorgegebenen Wirkleistungsstatik einstellen muss, um aktiv zur Frequenzerhaltung in der Netzspannung 84 beizutragen. Diese Ansteuerfrequenz wird nachstehend analog zu FIG 7 Leistungsfrequenz 172 bezeichnet. Die analog zu FIG 7 tiefpassgefilterte Leistungsfrequenz 174 über einen zu FIG 7 analogen Schalter 148 im Regelbetriebsmodus 150 als Stellfrequenz 176 für die Wechselrichterspannung 32 ausgegeben werden. Aus der PLL 162 lässt sich die aktuelle Netzfrequenz 178 entnehmen. Die analog zu FIG 7 tiefpassgefilterte Netzfrequenz 180 kann im Fehlerbetriebsmodus 152 als Stellfrequenz 176 für die Wechselrichterspannung 32 ausgegeben werden.

Über einen Integrator 182 kann die Stellfrequenz 176 in eine Wechselrichterspannungsphase 184 für die Wechselrichterspannung 32 umgewandelt werden. Aus der PLL 162 kann im Weiteren eine Netzspannungsphase 186 abgeleitet und tiefpassgefiltert werden. Die tiefpassgefilterte Netzspannungsphase 188 und die Wechselrichterspannungsphase 184 dann im Weiteren genauso zum Stellsignal 126 verarbeitet werden, wie die tiefpassgefilterte Leistungsspannung 158 und die tiefpassgefilterte Folgespannung 164 in FIG 8.

In FIG 9 ist der Schalter 148 nach dem Regler 168 gezeigt, der es erlaubt, den Regler 168 unveränderlich vorzuparametrieren.

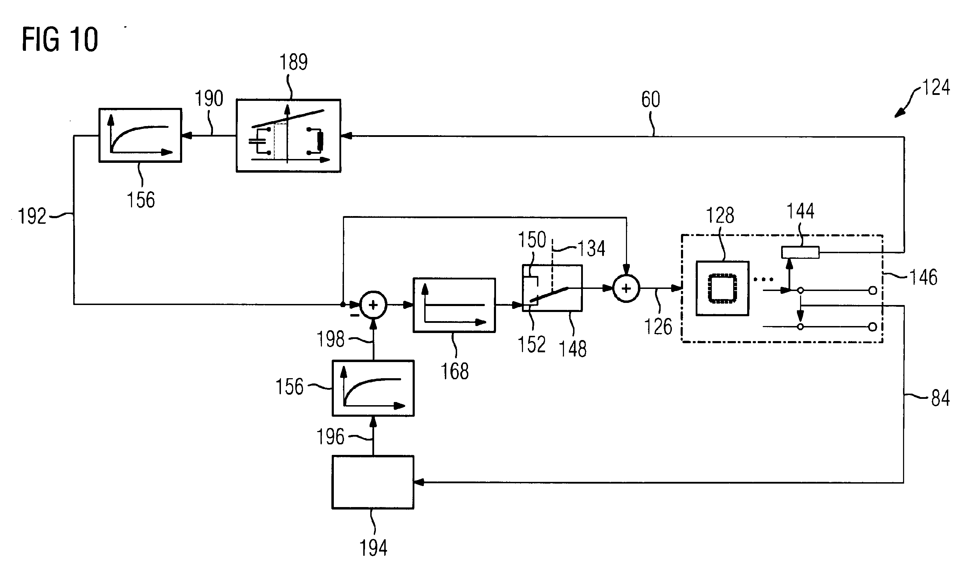

In FIG 10 ist das vierte Ausführungsbeispiel zur Berechnung des Stellsignals 126 gezeigt, das zur Einstellung des Effektivwertes der Wechselrichterspannung 32 basierend auf einer invertierten Wechselrichter-Blindleistungsstatikkennlinie 189 herangezogen wird.

Das Leistungsmessgerät 144 erfasst die vom Wechselrichter 6 abgegebene Blindleistung 60. Über die invertierte Wechselrichter-Blindleistungsstatikkennlinie 189 wird der notwendige Wechselrichtereffektivwert 190 für die Wechselrichterspannung 32 ausgegeben, damit der Wechselrichter 32 seiner vorgegebenen Blindleistungsstatik folgt. Der Wechselrichtereffektivwert 190 wird schließlich tiefpassgefiltert.

Über ein Spannungsmessgerät 194 kann der Netzspannungseffektivwert 196 bestimmt werden, der ebenfalls tiefpassgefiltert wird.

Der tiefpassgefilterte Wechselrichtereffektivwert 192 und der tiefpassgefilterte Netzspannungseffektivwert 198 werden dann im Weiteren genauso zum Stellsignal 126 verarbeitet, wie die tiefpassgefilterte Leistungsspannung 158 und die tiefpassgefilterte Folgespannung 164 in FIG 8.

Auch in FIG 10 ist der Schalter 148 nach dem Regler 168 gezeigt, der es erlaubt, den Regler 168 unveränderlich vorzuparametrieren.

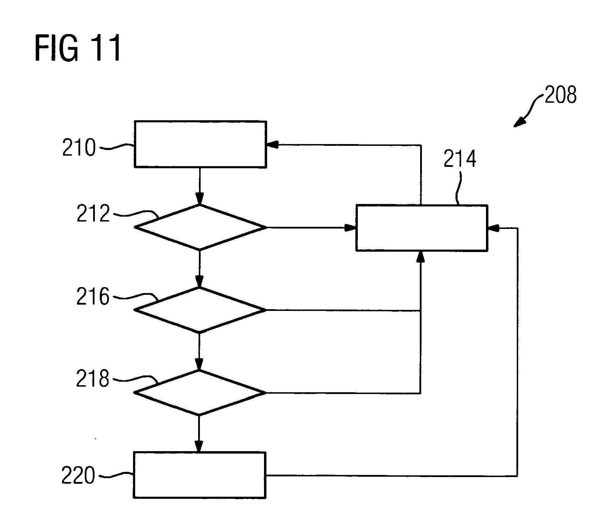

In FIG 11 ist beispielhaft ein Verfahren 208 zum Umschalten zwischen dem Regelbetriebsmodus 150 und dem Fehlerbetriebsmodus 152 dargestellt.

Das Verfahren beginnt im Schritt 210 damit, dass aus den invertierten Statikkennlinien 34 der Effektivwert 190, die Frequenz 172 und die Phase 184 für die Wechselrichterspannung 32 bestimmt wird. In den Schritten 212, 216 und 218 werden die oben genannten Bedingungen zur Erzeugung des Zustandssignals 134 nacheinander abgeprüft.

Während in Schritt 212 geprüft wird, ob ein Kurzschluss 70 vorliegt, wird in Schritt 216 geprüft, ob der Wechselrichter 6 noch nicht an seiner Wechselrichterstromgrenze $I_{ges}$ arbeitet und in Schritt 218, ob keine weiteren Energieerzeuger an das Leitungsnetz 4 angeschlossen sind.

Wird einer der Prüfschritte 212, 216, 218 bejaht, wird die Wechselrichterspannung 32 in Schritt 214 im Regelbetriebsmodus 150 basierend auf dem Effektivwert 190, der Frequenz 172 und der Phase 184 aus Schritt 210 erzeugt. Anderenfalls geht das Verfahren 208 in Schritt 220 in den Fehlerbetriebsmodus 152 über und erzeugt die Wechselrichterspannung 32 basierend auf dem Effektivwert 196, der Frequenz 180 und der Phase 186 der Netzspannung 84.

Innerhalb des Schrittes 220 kann geprüft werden, wann wieder eine der Bedingungen aus den Schritten 212, 216 erfüllt ist, um das Verfahren 208 in Schritt 218 zu überführen. Auf diese Weise wird die Wechselrichterspannung 32 im Fehlerbetriebsmodus 152 korrigiert, so dass der Wechselrichter 6 zeitnah wieder aktiv zur Erhaltung der Netzspannung 84 beitragen kann. Alternativ kann das Verfahren 208 nach einer bestimmten Zeit automatisch in Schritt 220 überführt werden.

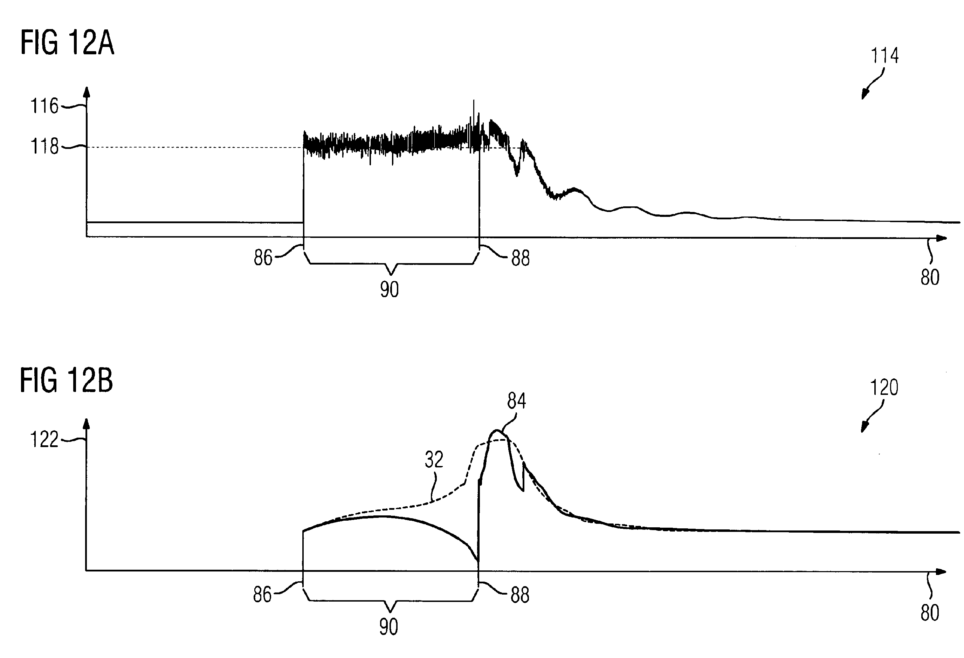

FIG 12 zeigt zu FIG 5 analoge Messergebnisse die auf einer Messung mit der angegebenen Vorrichtung 124 basieren.

Wie aus den FIG 12A und 12B unmittelbar ersichtlich, reduziert sich der Wechselrichterwirkstrom 116 sofort nach Auslösen der Sicherung 74 und die Frequenz 58 der Wechselrichterspannung 32 Wechselrichters 14 wird zeitnah mit der Frequenz der Netzspannung 84 synchronisiert.

Erfindungsgemäß folgt ein Wechselrichter, der in einem Regelbetrieb aktiv zur Erhaltung der Netzspannung in einem elektrischen Energieversorgungsnetz beiträgt, im Fehlerfall der Netzspannung.

Obwohl die Erfindung im Detail durch das bevorzugte Ausführungsbeispiel näher illustriert und beschrieben wurde, so ist die Erfindung nicht durch die offenbarten Beispiele eingeschränkt. Der Schutzumfang der Erfindung ergibt sich aus den Patentansprüchen.

**Patentansprüche**

1.   Verfahren zum Ansteuern eines an ein elektrisches Leitungsnetz (4) angeschlossenen Wechselrichters (6) mit den Schritten:

- Bestimmen (212,216,218), ob eine zur Synchronisation einer Wechselrichterspannung (32) des Wechselrichters (6) mit einer Netzspannung (84) des Leitungsnetzes (4) notwendige Wechselrichterleistung (14) eine Leistungsgrenze (118) des Wechselrichters (6) überschreitet,
- wenn die notwendige Wechselrichterleistung (14) die Leistungsgrenze (118) des Wechselrichters (6) überschreitet,

- - Erfassen (220) der Leitungsnetzspannung (84) und
- - Einstellen (214) der Wechselrichterspannung (32) durch Anpassen der einzustellenden Wechselrichterspannung (32) an die Leitungsnetzspannung (84), so dass die Wechselrichterspannung (32) der Leitungsnetzspannung (84) folgt,

- sonst

- - Erfassen (210) der durch das Leitungsnetz (4) vom Wechselrichter (6) abgerufenen Wechselrichterleistung (14), und
- - Einstellen (214) der Wechselrichterspannung (32) durch Entnehmen der einzustellenden Wechselrichterspannung (32) aus einer Wechselrichter-Statikkennlinie (34), die die abgerufene Wechselrichterleistung (14) der einzustellenden Wechselrichterspannung (32) gegenüberstellt, wobei der Wechselrichter (6) nach jedem Einstellen (214) der Wechselrichterspannung (32) gemäß der Leitungsnetzspannung (84) zum erneuten Bestimmen (212,216,218) vorgesehen ist, ob die notwendige Wechselrichterleistung (14) die Leistungsgrenze (118) des Wechselrichters (6) überschreitet.

2.   Verfahren nach Anspruch 1, wobei die Wechselrichter-Statikkennlinie (34) einer Generator-Statikkennlinie entspricht, die eine vom Generator abgegebene Generatorleistung (18) einer sich bei der abgegebenen Generatorleistung einstellenden Generatorspannung gegenüberstellt.

3.   Verfahren nach Anspruch 1 oder 2, wobei das Einstellen (214) der Wechselrichterspannung (32) folgende Schritte umfasst:

- Einstellen des Effektivwertes (190, 198) der Wechselrichterspannung (32), und/oder
- Einstellen der Frequenz (174,180) der Wechselrichterspannung (32), und/oder
- Einstellen der Phasendifferenz (184,188) der Wechselrichterspannung zur Leitungsnetzspannung (84).

4.   Verfahren nach einem der vorstehenden Ansprüche, wobei darauf geschlossen wird, dass die notwendige Wechselrichterleistung (14) die Leistungsgrenze (118) des Wechselrichters (32) nicht überschreitet wenn:

- das Leitungsnetz (4) eine Störung (70) aufweist; und/oder
- der Wechselrichter (6) die einzige und/oder stärkste Energieerzeugungseinheit im Leitungsnetz (4) ist.

5.   Verfahren nach Anspruch 4, wobei die Störung (70) ein Kurzschluss ist.

6.   Verfahren nach Anspruch 4 oder 5, wobei die Störung (70) einen Einbruch der Leitungsnetzspannung (84) hervorruft und die Leistungsgrenze (118) des Wechselrichters (32) von einer Stromgrenze ($I_{ges}$) des Wechselrichters (32) abhängig ist.

7.   Verfahren nach einem der Ansprüche 4 bis 6, wobei zum Bestimmen (218), ob der Wechselrichter (6) die einzige Energieerzeugungseinheit im Leitungsnetz (84) ist folgende Schritte durchgeführt werden:

- Ändern der Wechselrichterspannung (32) und der Wechselrichterleistung (14) gemäß der Statik-Kennlinie (34); und
- Feststellen, dass der Wechselrichter (6) die einzige Energieerzeugungseinheit im Leitungsnetz (4) ist, wenn eine Änderung der Leitungsnetzleistung (20) des Leitungsnetzes (4) unterhalb eines Schwellenwertes bleibt.

8.   Verfahren nach einem der vorstehenden Ansprüche, wobei das Anpassen (220) der einzustellenden Wechselrichterspannung (32) an die Leitungsnetzspannung (84) schrittweise durch Begrenzen der Änderung der Wechselrichterspannung (32) erfolgt.

9.   Verfahren nach einem der vorstehenden Ansprüche, wobei das Anpassen (220) der einzustellenden Wechselrichterspannung (32) an die Leitungsnetzspannung (84) durch folgende Schritte erfolgt:

- Berechnen einer Differenz (166) aus einem Sollwert (164) für die Wechselrichterspannung (32) und einem Istwert (158) der erfassten Leitungsnetzspannung (84);
- Umwandeln der Differenz (166) gemäß einer Regelungsvorschrift (168); und
- Berechnen der einzustellenden Wechselrichterspannung (32) durch Addieren der umgewandelten Differenz (170) mit dem Istwert (158).

10. Verfahren nach Anspruch 9, wobei der Istwert (158) aus der Wechselrichter-Statikkennlinie (34) als einzustellende Wechselrichterspannung (32) entnommen wird.

11. Verfahren nach Anspruch 9 oder 10, wobei die Regelungsvorschrift (168) dem Verhalten eines Proportionalreglers entspricht, der die Differenz (166) zum Umwandeln mit einem Gewichtungsfaktor gewichtet.

12. Verfahren nach Anspruch 11, wobei der Gewichtungsfaktor zwischen [0;1], vorzugsweise zwischen ]0;1[ liegt.

13. Vorrichtung zum Ansteuern eines Wechselrichters (6) umfassend:

- eine Spannungsstelleinrichtung (124,128) zum Einstellen der Wechselrichterspannung (32), wobei die Spannungsstelleinrichtung (124,128) zum Ausführen eines Verfahrens (208) nach einem der vorstehenden Ansprüche eingerichtet ist.

14. Vorrichtung nach Anspruch 13, umfassend eine Phasenregelschleife (162) zum Erfassen der Leitungsnetzspannung (84).

15. Vorrichtung nach Anspruch 13 oder 14 umfassend einen Tiefpass (156) zum Filtern der erfassten Leitungsnetzspannung (84) und zum Ausgeben der einzustellenden Wechselrichterspannung (164).

16. Wechselrichter zum Anschluss an ein elektrisches Energieversorgungsnetz (2) umfassend eine Vorrichtung nach einem der Ansprüche 13 bis 15.

**Claims**

1. Method for controlling an inverter (6) connected to an electric line network (4), with the steps:

- Determining (212, 216, 218) whether an inverter power (14) necessary for synchronisation of an inverter voltage (32) of the inverter (6) with a network voltage (84) of the line network (4) exceeds a power limit (118) of the inverter (6),
- If the necessary inverter power (14) exceeds the power limit (118) of the inverter (6),

- - Detecting (220) the line network voltage (84) and
- - Setting (214) the inverter voltage (32) by adapting the inverter voltage to be set (32) to the line network voltage (84), so that the inverter voltage (32) follows the line network voltage (84),

- Otherwise

- - Detecting (210) the inverter power (14) retrieved by the line network (4) from the inverter (6), and
- Setting (214) the inverter voltage (32) by taking the inverter voltage to be set (32) from a static inverter characteristic curve (34), which plots the retrieved inverter power (14) against the inverter power to be set (32),

wherein the inverter (6), after each setting (214) of the inverter voltage (32) in accordance with the line network voltage (84), is provided for renewed determination (212, 216, 218) of whether the necessary inverter power (14) exceeds the power limit (118) of the inverter (6).

2. Method according to claim 1, wherein the static inverter characteristic curve (34) corresponds to a static generator characteristic curve which plots a generator power (18) emitted by the generator against a generator voltage set for the emitted generator power.

3. Method according to claim 1 or 2, wherein the setting (214) of the inverter voltage (32) comprises the following steps:

- Setting the effective value (190, 198) of the inverter voltage (32), and/or
- Setting the frequency (174, 180) of the inverter voltage (32), and/or
- Setting the phase difference (184, 188) between the inverter voltage and the line network voltage (84).

4. Method according to one of the preceding claims, wherein it is concluded that the necessary inverter power (14) does not exceed the power limit (118) of the inverter (32) if:

- the line network (4) has a fault (70) and/or
- the inverter (6) is the only and/or the strongest power generation unit in the line network (4).

5. Method according to claim 4, wherein the fault (70) is a short-circuit.

6. Method according to claim 4 or 5, wherein the fault (70) causes a collapse of the line network voltage (84) and the power limit (118) of the inverter (32) is dependent on a current limit ($I_{ges}$) of the inverter (32).

7. Method according to one of claims 4 to 6 wherein, for determining (218) whether the inverter (6) is the only power generation unit (84) in the line network, the following steps are performed:

   - Changing the inverter voltage (32) and the inverter power (14) in accordance with the static characteristic curve (34); and
   - Establishing that the inverter (6) is the only power generation unit in the line network (4) if a change in the line network power (20) of the line network (4) remains below a threshold.

8. Method according to one of the preceding claims, wherein the adaptation (220) of the inverter voltage to be set (32) to the line network voltage (84) is done in stages by limiting the change of the inverter voltage (32).

9. Method according to one of the preceding claims, wherein the adaptation (220) of the inverter voltage (32) to be set to the line network voltage (84) is done by the following steps:

   - Calculation of the difference (166) between a required value (164) for the inverter voltage (32) and an actual value (158) of the detected line network voltage (84);
   - Conversion of the difference (166) in accordance with a regulation specification (168); and
   - Calculation of the inverter voltage (32) to be set by adding the converted difference (170) to the actual value (158).

10. Method according to claim 9, wherein the actual value (158) is taken from the static inverter characteristic curve (34) as the inverter voltage (32) to be set.

11. Method according to claim 9 or 10, wherein the regulation specification (168) corresponds to the behaviour of a proportional regulator which weights the difference (166) for conversion with a weighting factor.

12. Method according to claim 11, wherein the weighting factor lies between [0;1], preferably between ]0;1[.

13. Device for controlling an inverter (6) comprising:

   - a voltage setting device (124, 128) for setting the inverter voltage (32), wherein the voltage setting device (124, 128) is configured for performing a method (208) in accordance with one of the preceding claims.

14. Device according to claim 13, comprising a phase regulation loop (162) for detecting the line network voltage (84).

15. Device according to claim 13 or 14 comprising a lowpass (156) for filtering the detected line network voltage (84) and for outputting the inverter voltage to be set (164).

16. Inverter for connection to an electric power supply network (2) comprising a device according to one of claims 13 to 15.

**Revendications**

1. Procédé de commande d'un onduleur ( 6 ) raccordé à un réseau ( 4 ) de distribution électrique, comprenant les stades, dans lesquels :

   - on détermine ( 212, 21, 218 ) si une puissance ( 14 ) d'onduleur, nécessaire pour la synchronisation d'une tension ( 32 ) de l'onduleur ( 6 ) à une tension ( 84 ) du réseau ( 4 ) de distribution, dépasse une limite ( 118 ) de puissance de l'onduleur ( 6 ),
   - si la puissance ( 14 ) d'onduleur nécessaire dépasse la limite ( 118 ) de puissance de l'onduleur ( 6 ),

      - - on détecte ( 220 ) la tension ( 84 ) du réseau de distribution et
      - - on règle la tension ( 32 ) d'onduleur en adaptant la tension ( 32 ) d'onduleur à régler à la tension ( 84 ) du réseau de distribution, de manière à ce que la tension ( 32 ) d'onduleur suive la tension ( 84 ) du réseau de distribution,

   - sinon

      - - on détecte ( 210 ) la puissance ( 14 ) d'onduleur appelée de l'onduleur ( 6 ) par le réseau ( 4 ) de distribution, et
      - - on règle ( 214 ) la tension ( 32 ) d'onduleur en prélevant la tension ( 32 ) d'onduleur à régler d'une courbe ( 34 ) caractéristique statique d'onduleur, qui compare la puissance ( 14 ) d'onduleur appelée à la tension ( 32 ) d'onduleur à régler,

dans lequel l'onduleur ( 6 ) est, après chaque réglage ( 214 ) de la tension ( 32 ) d'onduleur suivant la tension ( 84 ) du réseau de distribution, prévu pour la détermination ( 212, 216, 218 ) renouvelée du point de savoir si la puissance ( 14 ) d'onduleur nécessaire dépasse la limite ( 118 ) de puissance de l'onduleur ( 6 ).

2. Procédé suivant la revendication 1, dans lequel la courbe ( 34 ) caractéristique statique d'onduleur correspond à une courbe caractéristique statique de génératrice, qui compare la puissance ( 18 ) de génératrice cédée par la génératrice à une tension de génératrice se réglant à la puissance de génératrice cédée.

3. Procédé suivant la revendication 1 ou 2, dans lequel le réglage ( 214 ) de la tension ( 32 ) d'onduleur comprend les stades suivantes :

   - réglage de la valeur ( 190, 198 ) efficace de la tension ( 32 ) d'onduleur, et/ou
   - réglage de la fréquence ( 174, 180 ) de la tension ( 32 ) d'onduleur, et/ou
   - réglage de la différence ( 184, 188 ) de phase de la tension d'onduleur à la tension ( 84 ) du réseau de distribution.

4. Procédé suivant l'une des revendications précédentes, dans lequel on déduit que la puissance ( 14 ) d'onduleur nécessaire ne dépasse pas la limite ( 118 ) de puissance de l'onduleur ( 32 ) si :

   - le réseau ( 4 ) de distribution a une panne ( 70 ) ; et/ou
   - l'onduleur ( 6 ) est l'unité unique et/ou la plus forte de production d'énergie dans le réseau ( 4 ) de distribution.

5. Procédé suivant la revendication 4, dans lequel la panne ( 70 ) est un court-circuit.

6. Procédé suivant la revendication 4 ou 5, dans lequel la panne ( 70 ) provoque un effondrement de la tension ( 84 ) du réseau de distribution et la limite ( 118 ) de puissance de l'onduleur ( 132 ) dépend d'une limite ( $Ig_{es}$ ) de courant de l'onduleur ( 32 ).

7. Procédé suivant l'une des revendications 4 à 6, dans lequel, pour déterminer ( 218 ) si l'onduleur ( 6 ) est l'unité unique de production d'énergie dans le réseau ( 84 ) de distribution, on effectue les stades suivantes :

   - on modifie la tension ( 32 ) d'onduleur et la puissance ( 14 ) d'onduleur suivant la courbe ( 34 ) caractéristique statique ; et

   - on constate que l'onduleur ( 6 ) est l'unité unique de production d'énergie dans le réseau ( 4 ) de distribution, si une variation de la puissance ( 20 ) du réseau ( 4 ) de distribution reste inférieure à une valeur de seuil.

8. Procédé suivant l'une des revendications précédentes, dans lequel l'adaptation ( 220 ) de la tension ( 32 ) d'onduleur à régler à la tension ( 84 ) du réseau de distribution s'effectue pas-à-pas en limitant la variation de la tension ( 32 ) d'onduleur.

9. Procédé suivant l'une des revendications précédentes, dans lequel l'adaptation ( 220 ) de la tension ( 32 ) d'onduleur à régler à la tension ( 84 ) du réseau de distribution s'effectue par les stades suivantes :

   - on calcule une différence ( 166 ) entre une valeur ( 164 ) de consigne de la tension ( 32 ) d'onduleur et une valeur ( 158 ) réelle de la tension ( 84 ) détectée du réseau de distribution ;
   - on transforme la différence ( 166 ) suivant une prescription ( 168 ) de régulation ; et
   - on calcule la tension ( 32 ) d'onduleur à régler en ajoutant la différence ( 170 ) transformée à la valeur ( 158 ) réelle.

10. Procédé suivant la revendication 9, dans lequel on prélève la valeur ( 158 ) réelle de la courbe ( 34 ) caractéristique statique de l'onduleur sous la forme d'une tension ( 32 ) d'onduleur à régler.

11. Procédé suivant la revendication 9 ou 10, dans lequel la prescription ( 168 ) de régulation correspond au comportement d'un régulateur proportionnel, qui pondère par un facteur de pondération la différence ( 166 ) pour la transformation.

12. Procédé suivant la revendication 11, dans lequel le facteur de pondération est compris entre [0;1], de préférence entre ]0;1[.

13. Dispositif de commande d'un onduleur ( 6 ), comprenant :

   - un dispositif ( 124, 128 ) de réglage de la tension ( 32 ) d'onduleur, le dispositif ( 124, 128 ) de réglage de la tension d'onduleur étant conçu pour effectuer un procédé ( 208 ) suivant l'une des revendications précédentes.

14. Dispositif suivant la revendication 13, comprenant une boucle ( 162 ) de réglage de phase pour la détection de la tension ( 84 ) du réseau de distribution.

15. Dispositif suivant la revendication 13 ou 14, comprenant un passe-bas ( 156 ) pour filtrer la tension ( 84 ) détectée du réseau de distribution et pour émettre la tension ( 164 ) d'onduleur à régler.

16. Onduleur à raccorder à un réseau ( 2 ) de distribution d'énergie électrique, comprenant un dispositif suivant l'une des revendications 13 à 15.

FIG 1

# FIG 2A

36

50

38

56

40

58

52

54

+

0

48

# FIG 2B

42

62

44

56

46

68

66

64

0

60

EP 2 533 413 B1

FIG 3A

FIG 3B

FIG 4

## FIG 5A

## FIG 5B

FIG 6

FIG 7

FIG 8

FIG 9

FIG 10

EP 2 533 413 B1

# FIG 11

FIG 12A

FIG 12B

EP 2 533 413 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006059199 B3